**Europäisches Patentamt**

**European Patent Office**

**Office européen des brevets**

(19)

(11) Veröffentlichungsnummer: **0 084 857**
**A2**

# (12) EUROPÄISCHE PATENTANMELDUNG

(21) Anmeldenummer: 83100460.1

(22) Anmeldetag: 20.01.83

(51) Int. Cl.³: **F 16 F 15/08,** F 16 F 1/40,
G 10 K 11/16

(30) Priorität: **22.01.82 DE 3201921**

(43) Veröffentlichungstag der Anmeldung: 03.08.83
Patentblatt 83/31

(84) Benannte Vertragsstaaten: **AT BE CH FR GB IT LI NL SE**

(71) Anmelder: **Munz, Erich, Weststrasse 11,
D-5204 Lohmar 1 - Geber (DE)**

(72) Erfinder: **Munz, Erich, Weststrasse 11, D-5204 Lohmar 1 -
Geber (DE)**

(74) Vertreter: **Wolf, Gunter, Dipl.-Ing., Patentanwälte Dipl.
Inge. Amthor und Wolf Postfach 180 144 Mittelweg 12,
D-6000 Frankfurt/Main (DE)**

(54) **Eckauflageelement zur körperschall- und erschütterungsisolierten Lagerung von Gegenständen.**

(57)    Das Eckauflageelement zur körperschall- und erschütterungsisolierten Lagerung von Gegenständen, besteht aus
einer lastverteilenden Tragplatte mit oberseitigem Gegenstandsanschlag und unterseitig befestigtem Körper aus
elastischem Material, wie Gummi oder dergl. Um die Herstellbarkeit zu vereinfachen und die Funktion eines solchen
Elementes zu verbessern, ist dieses derart ausgebildet, dass
die lochfreie Ecktragplatte (2) auf der innerhalb des Eckanschlages (3) liegenden Fläche ebenfalls mit einem elastischen Belag (4) flächendeckend versehen und an diesem
Belag (4) ein hochstehender Abdeckrand (4') für den Eckanschlag (3) mit angeformt ist.

- 1 -

Eckauflageelement zur körperschall- und erschütterungsisolierten Lagerung von Gegenständen
=============================================================

Die Erfindung betrifft ein Eckauflageelement zur körperschall-
und erschütterungsisolierten Lagerung von Gegenständen gemäß
Oberbegriff des Hauptanspruches.

Derartige Eckauflageelemente sind nach der DE-PS 25 06 836
bekannt.

Beim Aufstellen von z.B. Maschinen, Pumpen, Heizkesseln, Klimageräten
oder dergl. Aggregaten werden die eingangs erwähnten Auflageelemente
verwendet. Eines der Hauptprobleme bei der Aufstellung der aufgeführten Einrichtungen ist die elastische Standortsicherung und die
Körperschallisolierung.

Die bisher bekannten Auflageelemente werden zur Erreichung der
Standortsicherung z.B. durch Verschrauben mit der aufzustellenden
Einrichtung verbunden. Dies ist jedoch sehr arbeitsaufwendig und schafft
nicht immer die Standortsicherung. Darüber hinaus ist durch die metallische
Verbindung zwischen Auflageelement und aufzustellender Einrichtung
einer Körperschallisolierung nicht voll Rechnung getragen.

- 2 -

Aus der US-PS 2o 47 493 ist ein Auflageelement in Leistenform bekannt, welches aus einer lastenverteilenden Leiste mit unterseitig angebrachtem elastischem Körper besteht. Die Leiste weist oberseitig einen Winkelanschlag auf. Mit diesem bekannten Auflageelement kann ein Gegenstand nicht gleichzeitig fixiert und justiert werden.

Aus diesem Grunde ist das Eckauflageelement nach der DE-PS 25 o6 836 derart ausgebildet worden, daß der Anschlag als in der Tragplattenebene abgewinkelte Leiste ausgebildet ist und daß die Tragplatte mindestens eine durchgehende Öffnung aufweist, durch die der elastische Körper die Oberfläche der Tragplatte geringfügig überragt.

Dieses vorbekannte Eckauflageelement nach der DE-PS 25 o6 836 ist jedoch in zweierlei Hinsicht nachteilig:

Zum einen muß die metallische Tragplatte mit mindestens einer Öffnung versehen werden, wobei, sofern der elastische Gummikörper nicht in der Form an- bzw. einvulkanisiert wird, die Ausformung des elastischen Körpers in einer entsprechenden Form erfolgen muß, damit der nietkopfartige Durchgriff für die Öffnung gebildet werden kann.

Ferner besteht ein wesentlicher Nachteil darin, daß die durchgreifenden Gummiteile des elastischen Körpers keineswegs mit den

- 3 -

tatsächlich tragenden Teilen des aufzusetzenden Gerätes übereinstimmen
müssen, was zu einem Direktkontakt zwischen Unterseite, Geräteecke und
Tragplatte führen kann und außerdem ist der Gegenstandsanschlag
unabgedeckt, so daß es zu geräuschverursachenden Kontakten mit dem
aufgesetzten Gegenstand kommen kann.

Der Erfindung liegt demgemäß die Aufgabe zugrunde, das Eckauflageelement
der eingangs genannten Art nach der DE-PS 25 06 836 dahingehend zu verbessern, daß es einerseits einfacher herzustellen ist und daß es
andererseits die geforderte Körperschallisolation voll erfüllt und
nicht selbst zur Ursache von Geräuschbildungen werden kann.

Diese Aufgabe ist mit einem Auflageelement der eingangs genannten Art
nach der Erfindung durch das im Kennzeichen des Hauptanspruches Erfaßte gelöst. Vorteilhafte Weiterbildungen ergeben sich nach den Unteransprüchen.

Durch diese erfindungsgemäße Ausbildung ist ein Durchgriff der
Tragplatte, die aus Metall oder geeignetem Kunststoff gebildet
sein kann, auf der Hand liegend, wesentlich vereinfacht und verbessert,
zumal keine nietkopfartigen Teile als einzig tragende Teile für das
aufgesetzte Gerät vorhanden sind und diese bei ausreichender Deformation durch die Auflast durchaus wieder zu einem geräuschbildenden Kontakt zwischen Geräteunterseite und Tragplatte führen können,
wobei zudem noch zu berücksichtigen ist, daß je nach Gestaltung der
betreffenden Unterseitengestaltung des aufgesetzten Gerätes
noch nicht einmal immer gewährleistet ist, daß die durchgreifenden
Gummiteile des elastischen Körpers mit dem tragenden Eckbereich des Gerätes
überhaupt zusammentreffen. Durch die separate Auflage des elastischen
Belages kann dieser ohne weiteres flächendeckend zugeschnitten in Bezug
auf die Tragplatte am einfachsten durch Verkleben aufgebracht werden,
wobei es ein Leichtes ist, den Gegenstandsanschlag mit einzubeziehen,
was verhindert, daß ein geräuschbildender Vibrationskontakt zwischen
Anschlag und Außenseite der betreffenden unteren Geräteecke erfolgen kann.
Auch dafür bildet die separate Anbringung des elastischen Belages
eine günstige Voraussetzung, denn dieser Abdeckrand kann ohne weiteres
an den Belag angeformt werden.

Bevorzugt wird eine Ausführungsform in Kombination der
Ansprüche 1 und 4, da dafür das Eckauflageelement ideale Voraussetzungen
bietet, wobei diese Ausführungsform den Vorteil hat, daß    alle
elastischen Teile in einem entsprechend ausgebildeten Formwerkzeug als
ein Teil hergestellt und leicht aus der Form entnommen und ebenso
einfach auf die lochfreie Tragplatte aufgeschoben und mit dieser
verklebt werden können.

Elastische Körperschalldämmelemente mit integriertem Anschlagrand sind
zwar nach der DE-OS 27 5o 122 bekannt, hierbei handelt es sich aber um

- 5 -

eine Leiste mit besonderer Profilausbildung, die zudem keine metallische Tragplatte aufweist.

Ferner ist nach der US-PS 3 342 447 eine Auflageplatte bekannt,
in deren mehrlagigen elastischen Körper jeweils eine
metallische Versteifungsplatte eingelagert ist, wobei diese Auflageplatte keinen Eckanschlag im Sinne der DE-PS 25 o6 836 aufweist.

Das erfindungsgemäße Auflageelement und weitere vorteilhafte Ausführungsformen werden nachfolgend anhand von Ausführungsbeispielen
näher erläutert.

Es zeigt

Abb. 1 eine Draufsicht auf das Auflageelement;

Abb. 2 einen Schnitt durch das Auflageelement gemäß Fig. 1;

Abb. 3 einen vergrößerten Schnitt durch das Auflageelement in
etwas anderer Ausführungsform und

Abb. 4 perspektivisch eine besondere und bevorzugte Ausführungsform der elastischen Teile des Auflageelementes.

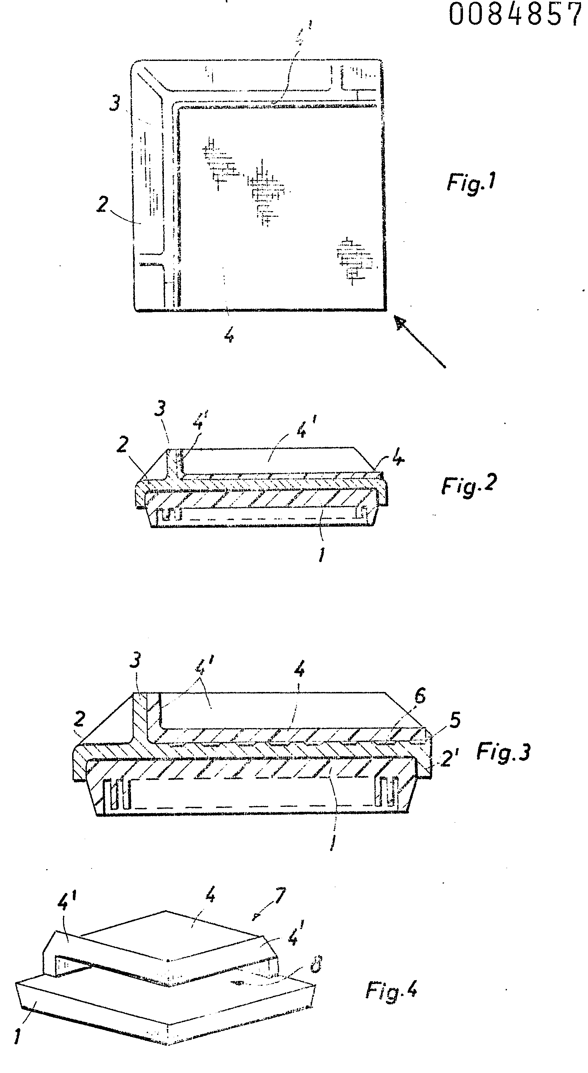

Wie aus Fig. 1,2 erkennbar, ist die genannte, innerhalb des

- 6 -

Anschlages 3 liegende Fläche der Ecktragplatte 2 ganzflächig mit dem elastischen Belag 4 versehen, an dem gleichzeitig der Abdeckrand 4´ mit angeformt ist, mit dem die geräteseitige Anlagefläche des Anschlages 3 ebenfalls elastisch verblendet ist, so daß auch diesbezüglich kein Vibrationskontakt zustande kommen kann. Die Verbindung des Belages 4 zur Tragplatte 2 erfolgt zweckmäßig mit einem geeigneten Dauerkleber, was auch für den bodenseitigen, elastischen Körper 1 gilt, so daß auf eine Anvulkanisierung dieser Teile verzichtet werden kann.

Gemäß Fig. 3 kann die Fläche der Tragplatte, rasterartig verteilt, mit Eintiefungen 6 versehen werden, in deren Bereich keine Verklebung erfolgen muß. Bei Auflast drückt sich aber der Belag in diese Eintiefungen 6 ein, was eine zusätzliche Sicherheit gegen Verrutschen darstellt. Da der Belag 4 dünn gehalten werden kann, drückt sich das "Wabenmuster" der Eintiefungen nach oben durch, was natürlich zusätzlich eine Verrutschsicherung für das aufgesetzte Gerät darstellt.

Zusätzlich kann an der Tragplatte 2 an deren freien Kanten ein kleiner Bordrand 5 vorgesehen werden, der in seiner Höhe kleiner ist als die Dicke des Belages 4.

Die spezielle Anordnung der elastischen Teile der Ecktragplatte 2 lassen eine weitere und bevorzugte Ausführungsform zu, nämlich im

- 7 -

Sinne der Fig. 4, gemäß der der elastische Körper 1, der Belag 4 und der Abdeckrand 4´ zu einem Stück 7 zusammengefaßt sind, was natürlich ein entsprechendes Formwerkzeug verlangt. Wie erkennbar, bilden der Körper 1 und der Belag 4 mit Abdeckrand 4´ eine Tasche 8, so daß das ganze Stück 7 diagonal in Pfeilrichtung gemäß Fig. 1 auf die Tragplatte 2 unter Beifügung eines Klebemittels aufgeschoben werden kann. Voraussetzung dafür ist natürlich, daß der nach unten gerichtete Rand 2´ der Tragplatte 2 (siehe Fig. 3) für diesen Fall nicht mehr vorhanden sein darf, es sei denn, dieser Rand wird verkürzt und in  das Stück 7 eine entsprechende Nut eingeformt, die sich mit dem verkürzten Rand verrasten kann.  Gleiches gilt für den kleinen Bordrand 5, für den in der Unterseite des Belages 4 ebenfalls eine Nut eingeformt werden kann.

Am Ende des Aufschubes des Stückes 7 schnappt dieses also regelrecht an der Tragplatte 2 ein.

0084857

- 1 -

Patentansprüche:

1. Eckauflageelement zur körperschall- und erschütterungsisolierten
   Lagerung von Gegenständen, bestehend aus einer lastenverteilenden
   Tragplatte und einem oberseitigen rechtwinklig verlaufenden Gegenstandsanschlag und unterseitig befestigtem Körper aus elastischem Material,
   wie Gummi oder dergl., d a d u r c h   g e k e n n z e i c h n e t ,
   daß die lochfreie Tragplatte (2) auf der innerhalb des rechtwinkligen
   Anschlages (3) liegenden Fläche ebenfalls mit einem elastischen Belag
   (4) mindestens in der zum Anschlag (3) benachbart liegenden Diagonalfläche der Tragplatte (2) flächenabdeckend und der Belag (4) mit einem
   hochstehenden Abdeckrand (4´) für den Anschlag (3) versehen ist.

2. Eckauflageelement nach Anspruch 1, d a d u r c h   g e k e n n -
   z e i c h n e t , daß die Belagsfläche der Tragplatte (2) nach außen
   durch einen Bordrand (5) begrenzt ist und der Bordrand (5) eine
   geringere Höhe als der Belag (4) hat.

3. Eckauflageelement nach Anspruch 1 und/oder 2, d a d u r c h   g e -
   k e n n z e i c h   n e t , daß der Belag (4) und der Abdeckrand (4´)
   für den Anschlag (3) als aufgesprühter elastischer Körper an der
   Tragplatte (2) und dem Anschlag (3) angeordnet ist.

4. Eckauflageelement nach Anspruch 1, d a d u r c h   g e k e n n -
z e i c h n e t , daß der Belag (4) und der elastische Körper (1)
aus einem Stück (7) gebildet und dieses taschenartig von der anschlagsfreien Seite aus auf die Tragplatte (2) aufgeschoben angeordnet ist.

Fig.1

Fig.2

Fig.3

Fig.4